# EUROPEAN PATENT APPLICATION

(11) **EP 3 438 781 A1**
(43) Date of publication of application: **06.02.2019**
(21) Application number: 17183932.7
(22) Date of filing: 31.07.2017
(51) Int. Cl.: G06F 1/16

(54) **DISPLAY PROTECTION SYSTEM AND DISPLAY PROTECTION METHOD**

(71) Applicant: Vestel Elektronik Sanayi ve Ticaret A.S., 45030 Manisa (TR)
(72) Inventor: YILDIZ, Kadir, 45030 Manisa (TR); ER, Alper Sait, 45030 Manisa (TR)
(74) Representative: Ascherl, Andreas

(57) **Abstract**

The present invention provides a display protection system (100, 200) for protecting a display (151, 251) of a laptop computer (150, 250) with a base (152, 252) and a display lid (153, 253), the display protection system (100, 200) comprising a lockable hinge mechanism (101, 201) that movably couples the base (152, 252) to the display lid (153, 253), a sensor (102, 202) configured to monitor the surface of the base (152, 252) for the presence of objects (103, 203) and configured to provide respective sensor signals (104), and a control unit (105) configured to determine if a potentially dangerous object (103, 203) is present on the base (152, 252) based on the sensor signals (104) and configured to provide a locking signal (106) to the lockable hinge mechanism (101, 201) that causes the lockable hinge mechanism (101, 201) to prevent the display lid (153, 253) from closing onto the base (152, 252) if a potentially dangerous object (103, 203) is detected.

## Description

### TECHNICAL FIELD

The invention relates to a display protection system and a corresponding display protection method.

### BACKGROUND

Although applicable to any device with a movable display, the present invention will mainly be described in conjunction with laptop computers.

Laptop computers are widely used in industrial applications as well as in private applications. For most of today's applications, like e.g. browsing the internet, working on documents or watching movies, the processing power of laptop computers is sufficient. Further, laptop computers allow easily carrying all the data on the computer and accessing the data everywhere with the laptop computer.

Usually laptop computers will comprise a base that comprises all components of the laptop computer but the display. The display is usually provided as a separate unit that is attached to the base via one or more hinges. The mechanical attachment of the display to the base is a common source of problems and defects and leads to defective displays being replaced. Displays may for example brake or may be scratched if the lid carrying the display is not properly or forcedly closed.

Replacing the display of a laptop computer is however complex and costly. Therefore, damaging the display of a laptop computer should be avoided.

Protective sheets may be provided on the display. Such sheets may protect the display from scratches caused by sharp objects. However, such sheets may not protect the display from heavy mechanical stress, like it may be present if the lid is closed with force.

Accordingly, there is a need for an improved protection of displays in laptop computers.

### SUMMARY OF THE INVENTION

The present invention provides a display protection system with the features of claim 1, a laptop computer with the features of claim 7, and a display protection method with the features of claim 8.

Accordingly, it is provided:
a display protection system for protecting a display of a laptop computer with a base and a display lid, the display protection system comprising a lockable hinge mechanism that movably couples the base to the display lid, a sensor configured to monitor the surface of the base for the presence of objects and configured to provide respective sensor signals, and a control unit configured to determine if a potentially dangerous object is present on the base based on the sensor signals and configured to provide a locking signal to the lockable hinge mechanism that causes the lockable hinge mechanism to prevent the display lid from closing onto the base if a potentially dangerous object is detected.

Further, it is provided:
a laptop computer comprising a base, a display lid that is movably coupled to the base, and a display protection system according to the present invention.

Further, it is provided:
a display protection method for protecting a display of a laptop computer with a base and a display lid that is movably coupled to the base via a lockable hinge mechanism, the display protection method comprising monitoring the surface of the base for the presence of objects, determining if a potentially dangerous object is present on the base, and providing a locking signal to the lockable hinge mechanism that causes the lockable hinge mechanism to prevent the display lid from closing onto the base if a potentially dangerous object is detected.

The present invention is based on the finding that purely passive protection mechanisms, like e.g. protective sheets, may not reliably protect the display of a laptop computer as required. The present invention therefore provides an active protection mechanism for protecting the display of the laptop computer.

The present invention is based on monitoring the space between the display lid and the base. When the display lid is closed, i.e. lowered onto the base, an object in this space may pierce or puncture the display or the display may brake if enough force is put into the lid.

The present invention therefore provides the sensor for monitoring the surface of the base. The sensor may be any type of sensor that provides a sensor signal that allows determining if an object is present on the base. The sensor may e.g. be an active sensor that performs an evaluation by itself and provides a positive signal if an object is present. As alternative, the sensor may be a passive sensor that provides sensor values without performing any analysis. The control unit may then process the sensor values to determine if an object is present. If the control unit determines that an object is present on the base, the control unit will provide a respective locking signal to the lockable hinge mechanism.

The lockable hinge mechanism is the active element of the display protection system that locks the display lid in position and prevents closing of the display lid. The lockable hinge mechanism may be a mechanism that is open or unlocked in an initial or standard state. When the locking signal is provided by the control unit, the lockable hinge mechanism may however switch into the locked state and mechanically lock the display lid in position or at least prevent fully closing the display lid.

With this arrangement the present invention provides a reliable protection system for displays in laptop computers that prevents objects on the base of the laptop computer from damaging the display.

It is understood, that the control unit may e.g. comprise a processor like a microcontroller or microprocessor that executes instructions that cause the processor to perform the function of the control unit.

Further embodiments of the present invention are subject of the further subclaims and of the following description, referring to the drawings.

In an embodiment, the sensor may comprise an optical sensor, especially a camera, more especially a stereoscopic camera.

A camera may record images of the base of the laptop computer. Such a camera may e.g. be provided in the frame of the display lid and may be oriented to or focused onto the base. The camera may e.g. be provided with a wide angle lens that allows the camera to record an image of the base in a wide range of positions of the display lid in relation to the base. It is understood, that the camera may either record a continuous video or may record single images in predetermined intervals.

The control unit may then analyze the recorded images and determine if an object is present on the base. The control unit may e.g. comprise images of the base without an object being present and may compare images recorded of the base by the camera with the images of the base without an object being present. If differences between the images are detected, an object may be present on the base and the control unit may provide the locking signal to the lockable hinge mechanism.

A stereoscopic camera may comprise two image sensors at different positions and may therefore provide in each case two images of the base recorded from different perspectives. With the two images of the base a three-dimensional structure of the base may be reconstructed, e.g. using triangulation techniques. The control unit may determine this three-dimensional structure and then determine the maximum height of the three-dimensional structure. If an object is present on the base, the maximum height will be higher than the known height of the base. Therefore, the control unit may provide the locking signal if the maximum height of the three-dimensional structure is higher than a predetermined threshold value. The maximum height of the three-dimensional structure may e.g. be determined by the control unit as the maximum height that is identified in the three-dimensional structure minus the minimum height that is identified in the three-dimensional structure.

Another possibility to determine the three-dimensional structure of the base of the laptop is applying a so called structure from motion algorithm to the camera images of a single sensor camera, while the display lid closes. In this case, the locking signal must be quickly provided to the lockable hinge mechanism to stop the motion of the display lid, if an object is detected on the base.

In another embodiment, the display protection system may comprise a lid angle sensor configured to measure the angle between the base and the display lid. The camera may comprise a webcam that may be integrated into a frame of the display lid and the control unit may be configured to use the camera signal as sensor signal during a closing movement of the display lid.

The lid angle sensor may e.g. be a dedicated sensor, like e.g. a potentiometer, that may be provided in the lockable hinge mechanism. As an alternative, the lid angle sensor may be a virtual sensor. The virtual sensor may e.g. be provided using the camera image and the known orientation of the camera in the frame of the display lid. In the recorded images the control unit may then determine the orientation of the base, e.g. using a structure from motion approach, and determine the angle of the display lid in relation to the base. During a closing procedure of the display lid a webcam of the laptop computer may then be used as sensor to detect objects on the lid. Usually the webcam will be oriented towards the user of the laptop. However, during a closing procedure of the display lid, the camera will be oriented towards the base and may therefore serve as the sensor. This however requires the control unit to acquire the lid angle sensor signal to know when the display lid is closing.

When the lid closing procedure is detected, the above already mentioned structure from motion approach may be used to detect an object on the surface of the base.

In a further embodiment, the sensor may comprise an ultrasonic distance sensor.

The ultrasonic distance sensor may e.g. be provided on the lower edge of the display lid, i.e. the edge that touches the base. The ultrasonic distance sensor may be oriented parallel to the surface of the base of the laptop computer. The ultrasonic sensor will therefore measure the distance from the edge of the lid to an object that is present on the base. The size of the base is known. Therefore, if the ultrasonic distance sensor measures a distance that is larger than the length of the base, no object is present on the base. If however the ultrasonic distance sensor measures a distance that is smaller than the size of the base, an object is probably present on the base and the control unit may issue the locking signal.

In an embodiment, the display protection system may comprise a user alert system configured to alert a user based on the locking signal.

The user alert system may e.g. comprise an optical warning actuator or an audible warning actuator. A visible warning may e.g. be provided via the display of the laptop computer or via a dedicated actuator, like e.g. a LED or the like. For example after a user logs out of the operating system of the laptop computer or executes a shutdown of the laptop computer, a respective warning may be shown on the display. In addition or as alternative the audible warning signal may be provided, e.g. via the speakers of the laptop computer.

The user alert system may be synchronized to the lockable hinge mechanism. This means that the user alert system may be triggered directly by the locking signal. As alternative, the control unit may provide a separate control signal for the user alert system that may be derived from the locking signal. This allows the control unit to e.g. delay the control signal or perform other adaptations of the locking signal.

In another embodiment, the lockable hinge mechanism may comprise a number, i.e. one or more, of movable pins or teeth that are provided on first hinge parts and are retracted in an unlocked state and engage in second hinge parts in a locked state, wherein the first hinge parts and the second hinge parts are arranged relatively movably to each other.

The first and second hinge parts form the parts of the hinge that are movable relative to each other. This means that the display lid may e.g. be coupled to the first hinge parts and the second hinge parts may be coupled to the base or vice versa. The movable pins or teeth may e.g. comprise an electromagnetic actuator, especially a bi-stable actuator that may be switched from one position to the other with short signal pulses. The use of a bi-stable actuator reduces the energy consumption of the lockable hinge mechanism, because no permanent power supply is necessary in the lockable hinge mechanism to hold a specific state.

The movable pins or teeth may interlock or engage with respective recesses in the second hinge parts. The second hinge parts may e.g. comprise a plurality of such recesses on a path corresponding to the position of the pins or teeth during a closing procedure of the display lid. If the pins or teeth are positioned in the locked state but no recess in the correct position, the pins or teeth will therefore engage with the next recess while the display lid is closing.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
Fig. 1 shows a block diagram of an embodiment of a display protection system according to the present invention;
Fig. 2 shows a block diagram of another embodiment of a display protection system according to the present invention;
Fig. 3 shows a block diagram of an embodiment of a lockable hinge mechanism according to the present invention; and
Fig. 4 shows a flow diagram of an embodiment of a display protection method according to the present invention.

In the figures like reference signs denote like elements unless stated otherwise.

### DETAILED DESCRIPTION OF THE DRAWINGS

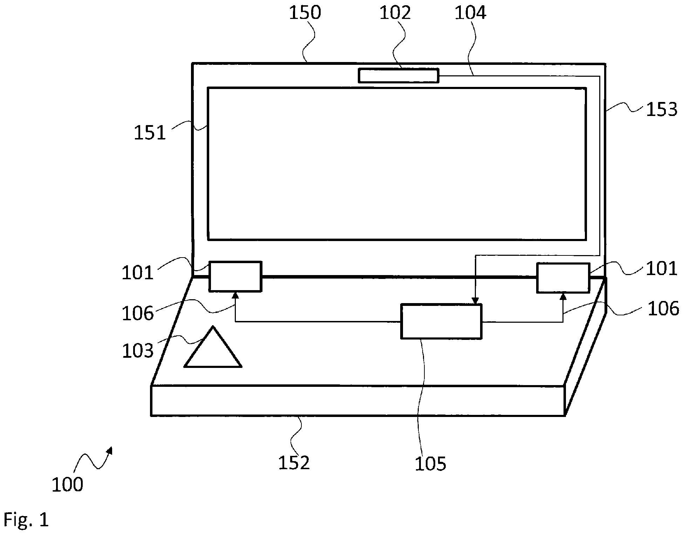

Fig. 1 shows a block diagram of a display protection system 100. The display protection system 100 is arrange in a laptop computer 150 that comprises a base 152 and a display lid 153 with a display 151.

The display protection system 100 comprises a lockable hinge mechanism 101 arranged between the base 152 and the display lid 153. The display protection system 100 further comprises a sensor 102 that is coupled to a control unit 105. The control unit 105 is communicatively coupled to the lockable hinge mechanism 101.

The sensor 102 monitors the surface of the base 152 and provides respective sensor signals 104 to the control unit 105. The sensor 102 may e.g. be a camera-based sensor, especially a stereoscopic camera. The sensor 102 may e.g. provide image data to the control unit 105 as sensor signals 104 for further analysis. It is however understood, that the sensor 102 may also perform a pre-processing of the sensor data and provide simplified sensor signals 104. Such simplified sensor signals 104 may e.g. be a binary signal that indicates if an object 103 is present on the base 152 or not. A sensor 102 that performs such pre-processing may e.g. comprise respective processing elements, like e.g. a digital signal processor, DSP, or the like, that performs the pre-processing e.g. with respective image recognition algorithms.

The control unit 105 receives the sensor signals 104 and decides based on the sensor signals 104 if the display lid 153 must be locked into position or not. If the sensor 102 does not perform a pre-processing and e.g. provides images or a video stream as sensor signals 104, the control unit 105 may implement respective image recognition algorithms that allow detecting the object 103 on the base 152. Such image recognition algorithms for the DSP of the sensor 102 or the control unit 105 may e.g. compare a known image of the base 152 with an image of the base 152 recorded by the sensor 102. If a difference is detected between both images, the display lid 153 may be locked. It is understood, that such algorithms may implement further functions, like e.g. a hand detection that identifies the hands of the user on the base and prevents locking of the lockable hinge mechanism 101 if the detected object 103 is a hand of a user.

The control unit 105 provides the locking signal 106 to the lockable hinge mechanism 101. In the display protection system 100 the lockable hinge mechanism 101 comprises two hinges that may be controllably locked by the control unit 105 with the locking signal 106. It is understood, that any other number of hinges is also possible.

Summing up, the sensor 102 monitors the base 152 for the presence of at least one object 103 and provides respective sensor signals 104 to the control unit 105. If the control unit 105 identifies a potentially dangerous object 103, the control unit 105 issues the locking signal 106 to the lockable hinge mechanism 101 and prevents closing of the display lid 153.

It is understood, that any other type of lockable hinge mechanism 101 may also be provided. For example, only one lockable hinge may be provided or a separate locking mechanism may be provided that is not arranged in the hinges.

The control unit 105 may be provided as a dedicated control unit, e.g. a microprocessor, a microcontroller or an ASIC. It is however also possible to provide the control unit 105 as a software function that may e.g. be integrated into an operating system that is executed by the main processing unit of the laptop computer 150. Such a software function may e.g. access the webcam of the laptop computer 150 as sensor 102 e.g. via an API, application programming interface, provided by the operating system. The same applies to the lockable hinge mechanism 101. This may not be provided as software function but the access to the lockable hinge mechanism 101 may e.g. be provided via the operating system and a respective API or hardware driver.

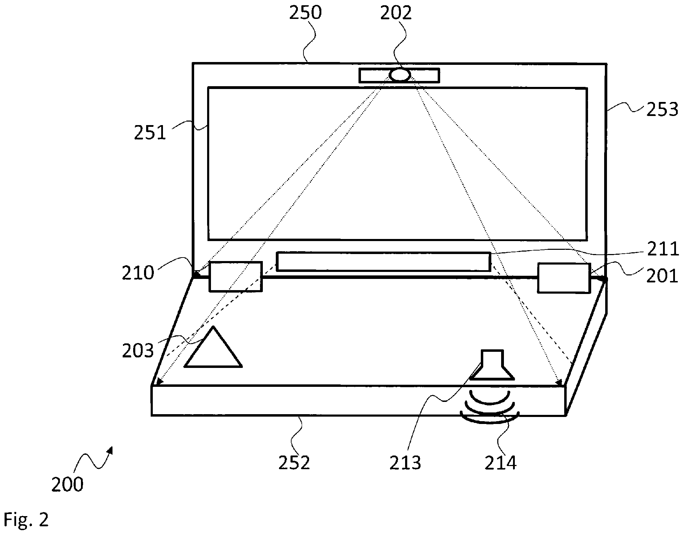

Fig. 2 shows a block diagram of another embodiment of a display protection system 200. The display protection system 200 is based on the display protection system 100 and is also arranged in a laptop computer 250 with a base 252 and a display lid 253 that carries a display 251. For sake of clarity, the control unit is not explicitly shown. It is however understood, that the above explanations regarding the control unit 105 also apply to the control unit of the display protection system 200.

In the display protection system 200 the sensor is the webcam 202 of the laptop computer 250. The webcam 202 may e.g. be a wide angle camera that is capable of recording image data of the base 252 while at the same time recording images of a user in front of the webcam 202. The driver of the webcam 202 in the operating system of the laptop computer 250 may e.g. automatically crop the image of the webcam 202 to the image that a standard camera would record of the user only. This allows using a single camera module as webcam 202 and as sensor 202. It is further understood, that the lens of the webcam 202 may comprise two section, a lower section that is a kind of wide angle or fisheye lens and an upper section that is a standard lens of the webcam 202. The upper section may serve to record images of the user while the lower section may serve to record wide angle images of the base 252. A function in the webcam 202 or the control unit may perform a de-distortion of the image part recorded with the lower section of the lens.

The display protection system 200 comprises an additional sensor, the ultrasonic distance sensor 211. The ultrasonic distance sensor 211 is arranged on the lower edge of the display lid 253 and measures the distance of objects in a plane parallel to the base 252. If no object is present on the base 252, the ultrasonic distance sensor 211 will measure a distance that is greater than the depth or length of the base. If however e.g. the object 203 is present on the base 252, the ultrasonic distance sensor 211 will measure the distance between the lower edge of the display lid 253 and the object 203. Since the length or depth of the base 252 is known, comparing the measured distance with the known length or depth reveals if an object 203 is present on the base 252. If the measured distance is smaller than the known length or depth, the object 203 is present.

It is understood, that the webcam 202 and the ultrasonic distance sensor 211 may be used in parallel. It is however also understood, that embodiments of the display protection system may use either the webcam 202 or the ultrasonic distance sensor 211 exclusively.

The display protection system 200 further comprises a lid angle sensor 210 that is arranged in the left hinge that couples the base 252 with the display lid 253. The lockable hinge mechanism 201 is therefore implemented in the right hinge only.

The lid angle sensor 210 serves for measuring the angle between the base 252 and the display lid 253. With the lid angle sensor 210 it may e.g. be determined when the user starts closing the display lid 253. In case that the webcam 202 is a standard webcam 202, without the above explained wide angle properties, it will usually not be focused onto the base 252. However, when the display lid 253 starts closing the base 252 will come into the view of the webcam 202. Therefore, the webcam 202 may be used to detect the object 203 when the display lid 253 is closing. It is understood, that the latency for detecting the object 203 and issuing the locking signal must be low enough to prevent closing the display lid 253 if the object 203 is detected while the display lid 253 is already closing.

It is understood, that the lid angle sensor 210 may be replaced by applying a structure from motion algorithm to the camera images of the webcam 202 to determine the relative position of the webcam 202 to the base 252.

The display protection system 200 further comprises a user alert system 213. The user alert system 213 is shown as a speaker 213 that may produce an audible warning signal 214 for a user of the laptop computer 250. The user alert system 213 may be triggered by the locking signal. However, the control unit may also issue a dedicated warning activation signal. It is further understood, that a visible warning signal may also be provided, e.g. a blinking light.

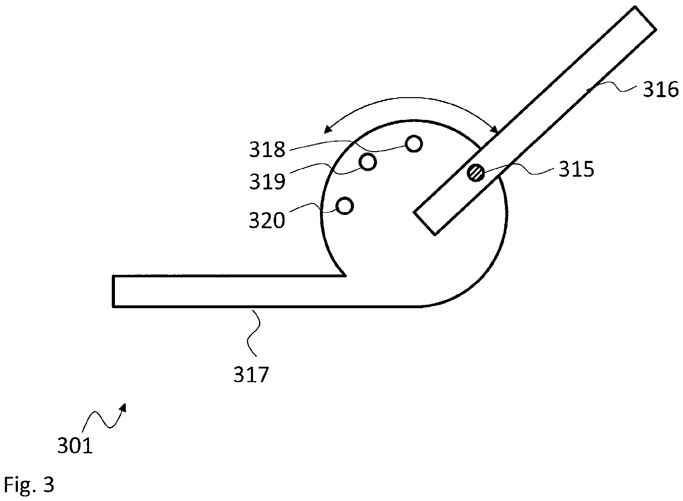

Fig. 3 shows a block diagram of a lockable hinge mechanism 301. The lockable hinge mechanism 301 is shown in a side view and comprises a first hinge part 316 that is rotatably attached at one end to a second hinge part 317. The second hinge part 317 comprises a circular section at the end that is coupled to the first hinge part 316 and the first hinge part 316 is attached in the center of the circular section. The first hinge part 316 therefore rotates around the center of the circular section when the display lid is closed.

The display lid may be attached to the first hinge part 316 and the base may be attached to the second hinge part 317. As an alternative the arrangement may be inverted and the display lid may be attached to the second hinge part 317 and the base may be attached to the first hinge part 316.

The first hinge part 316 carries a movable pin 315 and the circular section of the second hinge part 317 comprises three recesses 318, 319, 320. The movable pin 315 may be controlled to move in the direction of the second hinge part 317, into the image plane. It is understood, that the movable pin 315 will not move, if no one of the recesses 318, 319, 320 is positioned accordingly under the movable pin 315. It is however understood, that the movable pin 315 may be spring loaded into the direction of the second hinge part 317 by the locking signal. As soon as one of the recesses 318, 319, 320 moves under the movable pin 315 it will then snap into position, i.e. into the respective one of the recesses 318, 319, 320.

The movement of the movable pin 315 may e.g. be provided by a magnetic movement arrangement, like e.g. a solenoid or lifting magnet. It is however understood, that any other type of arrangement may also be used. Such an arrangement may e.g. comprise electric motors or servos.

The lockable hinge mechanism 301 allows flexibly locking the lid in position. The lid may e.g. be wide open and no one of the recesses 318, 319, 320 may be in position for the movable pin 315 to lock into. In this case, the lid may be closed until one of the recesses 318, 319, 320 comes into position under the movable pin 315. The movable pin 315 will then snap into the respective one of the recesses 318, 319, 320.

Therefore, safe locking of the lid in any arbitrary position is possible.

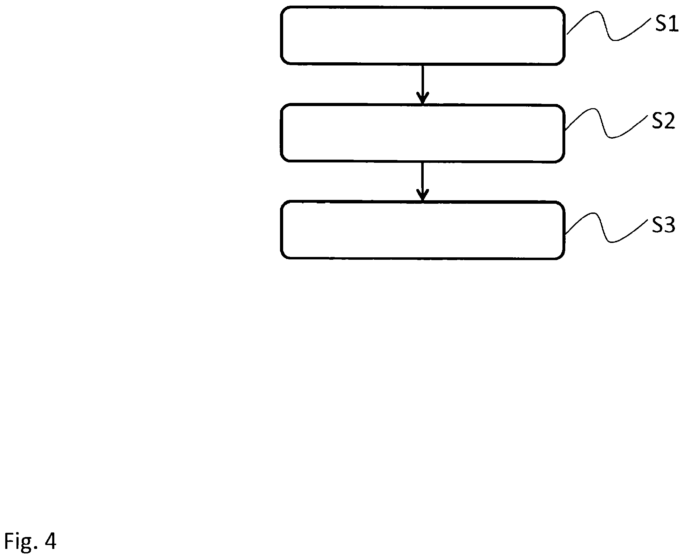

For sake of clarity in the following description of the method based Fig. 4 the reference signs used above in the description of apparatus based Figs. 1 - 3 will be maintained.

Fig. 4 shows a flow diagram of an embodiment of a display protection method for protecting a display 151 of a laptop computer 150 with a base 152 and a display lid 153 that is movably coupled to the base 152 via a lockable hinge mechanism 101, 201.

The display protection method comprises monitoring S1 the surface of the base 152 for the presence of objects 103, 203, determining S2 if a potentially dangerous object 103, 203 is present on the base 152, and providing S3 a locking signal 106 to the lockable hinge mechanism 101, 201 that causes the lockable hinge mechanism 101, 201 to prevent the display lid 153 from closing onto the base 152 if a potentially dangerous object 103, 203 is detected.

Monitoring S1 may e.g. comprise optical monitoring, especially with an optical sensor, especially with a camera, more especially with a stereoscopic camera. Monitoring S1 may also comprise ultrasonic-based monitoring.

The method may further comprise measuring the angle between the base 152, 252 and the display lid 153, 253. The camera may comprises a webcam that is integrated into a frame of the display lid 153, 253 and the method may comprises using the camera signal as sensor signal 104 during a closing movement of the display lid 153, 253.

The method may in addition comprise alerting a user based on the locking signal 106.

In addition to providing S3 the locking signal 106, the method may comprise controlling a number of movable pins 315 or teeth that are provided on first hinge parts 316 of the lockable hinge mechanism 101, 201 and are retracted in an unlocked state to engage in second hinge parts 317 of the lockable hinge mechanism 101, 201 in a locked state. This prevents the display lid 153, 253 from closing onto the base 152, 252. The first hinge parts 316 and the second hinge parts 317 may be relatively movably to each other.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a display protection system 100, 200 for protecting a display 151, 251 of a laptop computer 150, 250 with a base 152, 252 and a display lid 153, 253, the display protection system 100, 200 comprising a lockable hinge mechanism 101, 201 that movably couples the base 152, 252 to the display lid 153, 253, a sensor 102, 202 configured to monitor the surface of the base 152, 252 for the presence of objects 103, 203 and configured to provide respective sensor signals 104, and a control unit 105 configured to determine if a potentially dangerous object 103, 203 is present on the base 152, 252 based on the sensor signals 104 and configured to provide a locking signal 106 to the lockable hinge mechanism 101, 201 that causes the lockable hinge mechanism 101, 201 to prevent the display lid 153, 253 from closing onto the base 152, 252 if a potentially dangerous object 103, 203 is detected.

### List of reference signs

- 100, 200: display protection system
- 101, 201, 301: lockable hinge mechanism
- 102, 202: sensor
- 103, 203: object
- 104: sensor signal
- 105: control unit
- 106: locking signal
- 210: lid angle sensor
- 211: ultrasonic distance sensor
- 213: user alert system
- 214: warning signal
- 315: movable pin
- 316: first hinge part
- 317: second hinge part
- 318, 319, 320: recess
- 150, 250: laptop computer
- 151, 251: display
- 152, 252: base
- 153, 253: display lid
- S1 - S3: method steps

## Claims

1. Display protection system (100, 200) for protecting a display (151, 251) of a laptop computer (150, 250) with a base (152, 252) and a display lid (153, 253), the display protection system (100, 200) comprising:
a lockable hinge mechanism (101, 201) that movably couples the base (152, 252) to the display lid (153, 253),
a sensor (102, 202) configured to monitor the surface of the base (152, 252) for the presence of objects (103, 203) and configured to provide respective sensor signals (104), and
a control unit (105) configured to determine if a potentially dangerous object (103, 203) is present on the base (152, 252) based on the sensor signals (104) and configured to provide a locking signal (106) to the lockable hinge mechanism (101, 201) that causes the lockable hinge mechanism (101, 201) to prevent the display lid (153, 253) from closing onto the base (152, 252) if a potentially dangerous object (103, 203) is detected.

2. Display protection system (100, 200) according to claim 1, wherein the sensor comprises an optical sensor, especially a camera, more especially a stereoscopic camera.

3. Display protection system (100, 200) according to claim 2, comprising a lid angle sensor (210) configured to measure the angle between the base (152, 252) and the display lid (153, 253), wherein the camera comprises a webcam that is integrated into a frame of the display lid (153, 253) and wherein the control unit (105) is configured to use the camera signal as sensor signal (104) during a closing movement of the display lid (153, 253).

4. Display protection system (100, 200) according to any one of the preceding claims, wherein the sensor comprises an ultrasonic distance sensor (211).

5. Display protection system (100, 200) according to any one of the preceding claims, comprising a user alert system (213) configured to alert a user based on the locking signal (106).

6. Display protection system (100, 200) according to any one of the preceding claims, wherein the lockable hinge mechanism (101, 201) comprises a number of movable pins (315) or teeth that are provided on first hinge parts (316) and are retracted in an unlocked state and engage in second hinge parts (317) in a locked state, wherein the first hinge parts (316) and the second hinge parts (317) are arranged relatively movably to each other.

7. Laptop computer (150, 250) comprising:
a base (152, 252),
a display lid (153, 253) that is movably coupled to the base (152, 252), and
a display protection system (100, 200) according to any one of the preceding claims.

8. Display protection method for protecting a display (151, 251) of a laptop computer (150, 250) with a base (152, 252) and a display lid (153, 253) that is movably coupled to the base (152, 252) via a lockable hinge mechanism (101, 201), the display protection method comprising:
monitoring (S1) the surface of the base (152, 252) for the presence of objects (103, 203),
determining (S2) if a potentially dangerous object (103, 203) is present on the base (152, 252), and
providing (S3) a locking signal (106) to the lockable hinge mechanism (101, 201) that causes the lockable hinge mechanism (101, 201) to prevent the display lid (153, 253) from closing onto the base (152, 252) if a potentially dangerous object (103, 203) is detected.

9. Display protection method according to claim 8, wherein monitoring comprises optical monitoring, especially with an optical sensor, especially with a camera, more especially with a stereoscopic camera.

10. Display protection method according to claim 9, comprising measuring the angle between the base (152, 252) and the display lid (153, 253), wherein the camera comprises a webcam that is integrated into a frame of the display lid (153, 253) and wherein the method comprises using the camera signal as sensor signal (104) during a closing movement of the display lid (153, 253).

11. Display protection method according to any one of the preceding claims 8 to 10, wherein monitoring comprises ultrasonic-based monitoring.

12. Display protection method according to any one of the preceding claims 8 to 11, comprising alerting a user based on the locking signal (106).

13. Display protection method according to any one of the preceding claims 8 to 12, comprising controlling a number of movable pins (315) or teeth that are provided on first hinge parts (316) of the lockable hinge mechanism (101, 201) and are retracted in an unlocked state to engage in second hinge parts (317) of the lockable hinge mechanism (101, 201) in a locked state to prevent the display lid (153, 253) from closing onto the base (152, 252), wherein the first hinge parts (316) and the second hinge parts (317) are relatively movably to each other.
